(19) **Europäisches Patentamt**

**European Patent Office**

**Office européen des brevets**

(11) **EP 1 129 916 B1**

(12) **EUROPÄISCHE PATENTSCHRIFT**

(45) Veröffentlichungstag und Bekanntmachung des Hinweises auf die Patenterteilung:
**19.10.2005 Patentblatt 2005/42**

(51) Int Cl.⁷: **B60T 8/00**

(21) Anmeldenummer: **01102665.5**

(22) Anmeldetag: **07.02.2001**

(54) **Verfahren zur Erhöhung der Fahrstabilität bei einem Fahrzeug**

Method for increasing the driving stability of a vehicle

Procédé permettant d'augmenter la stabilité de conduite d'un véhicule automobile

(84) Benannte Vertragsstaaten:
**DE ES FR GB IT SE**

(30) Priorität: **01.03.2000 DE 10009921**

(43) Veröffentlichungstag der Anmeldung:
**05.09.2001 Patentblatt 2001/36**

(73) Patentinhaber: **Bayerische Motoren Werke Aktiengesellschaft**
**80809 München (DE)**

(72) Erfinder: **Baumgarten, Götz, Dr.**
**85757 Karlsfeld (DE)**

(56) Entgegenhaltungen:
**DE-A- 19 749 005** **US-A- 5 931 546**

**Beschreibung**

Die Erfindung betrifft ein Verfahren zur Erhöhung der Fahrstabilität bei einem Fahrzeug gemäß dem Oberbegriff des Anspruchs 1 und geht von der US-A-5931546 aus.

Zur Erhöhung der Fahrsicherheit und der Fahrstabilität bei einem Fahrzeug ist es bekannt, Fahrzeug-Regeleingriffe durchzuführen, die ein einer Fahrzeuginstabilität entgegenwirkendes Giermoment aufbauen, so dass das Fahrzeug in einer stabilen Fahrsituation gehalten oder wieder in eine solche gebracht werden kann und nicht außer Kontrolle gerät.

Allgemein bekannt ist in diesem Zusammenhang ein Bremsregeleingriff an den einzelnen Rädern eines Fahrzeuges derart, dass die über die Räder auf die Straße übertragenen Kräfte so gewählt werden, um insgesamt zu einem Gegengiermoment zu kommen, welches einer Unter- oder Übersteuertendenz entgegenwirkt. Entsprechende Regelungsmechanismen sind auch in Verbindung mit einer Überlagerungslenkung oder einer Hinterradlenkung möglich. Allgemein werden in solchen Fällen immer (Gegen-)Giermomente erzeugt, welche gerade auftretenden Fahrinstabilitäten entgegenwirken. Die Regelungsalgorithmen zur Erzeugung eines entsprechenden Gegengiermomentes sind vielzählig.

Aus der US-A-5931546 ist ein Verfahren zur Stabilisierung eines Fahrzeugs durch Bremsregeleingriffe bekannt, das als Reglerkommando eine Größe in Abhängigkeit von der Differenz aus dem Quotienten von Fahrzeugquerbeschleunigung und Fahrzeuggeschwindigkeit einerseits und der tatsächlich auftretenden Gierrate andererseits verwendet.

Zwar sind Bremsregeleingriffe zur Fahrzeugstabilisierung sehr wirkungsvoll, weil gleichzeitig eine gewisse Reduzierung der Fahrzeug-Fahrgeschwindigkeit erfolgt, jedoch sind Bremsregeleingriffe aus eben diesem Grund teilweise auch unbefriedigend, wenn nämlich ein relativ geringes Gegengiermoment zur Stabilisierung ausreichen würde, ohne dass eine vom Fahrer des Fahrzeugs als unangenehm empfundene Geschwindigkeits-Reduzierung erforderlich ist.

Daher soll hiermit ein verfeinertes Verfahren zur Erhöhung der Fahrstabilität nach dem Oberbegriff des Anspruchs 1 aufgezeigt werden, dass zumindest zunächst ohne Bremsregeleingriff auskommt und das es ermöglicht, aus im Fahrzeug verfügbaren Sensorinformationen eine Stabilisierung des Fahrzeugs in allen Fahrsituationen und bei allen Fahrbahnreibwerten zu realisieren (= Aufgabe der Erfindung).
Diese Aufgabe wird durch die im Anspruch 1 genannten Merkmale gelöst, wie im weiteren näher erläutert wird.

Kraftfahrzeuge sind bei ihrer Fortbewegung auf den Reibschluß zwischen Reifen und Fahrbahn angewiesen. Dies gilt insbesondere für Fahrdynamikvorgänge wie sie beim Beschleunigen, beim Bremsen und bei Kurvenfahrten, wobei im letzteren Fall die Reifenseitenkräfte entscheidend sind, auftreten. Neben den Reifeneigenschaften bestimmen die Aufstandskraft und der Fahrbahnreibwert, wieviel Umfangs- bzw.
Seitenkraft entstehen, insbesondere wenn ein bestimmter Schlupf oder Schräglaufwinkel gegeben ist.

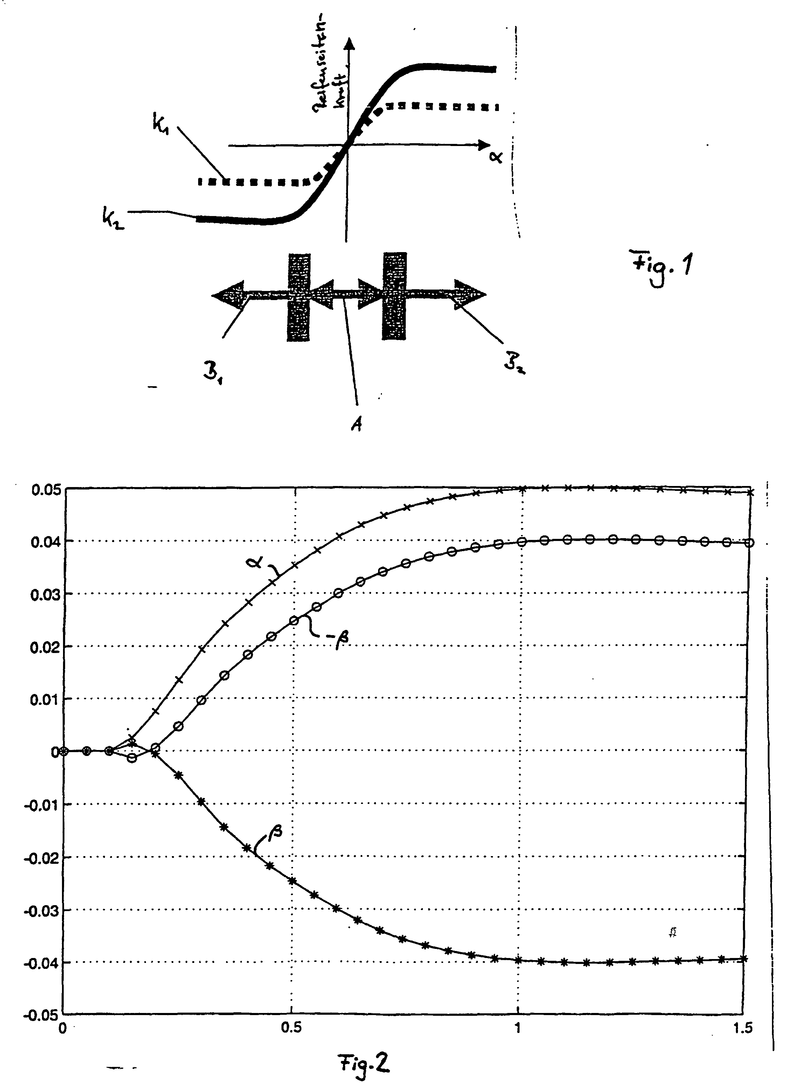

Prinzipiell problematisch ist der Einfluß des Fahrbahnreibwertes, der zwar für die maximal mögliche Reifenseitenkraft sehr bestimmend, jedoch von seiner Größe her nur sehr schwierig abzuschätzen ist. Die Reifenseitenkraft und der sog. Schräglaufwinkel $\alpha$ hängen voneinander ab, wie Fig. 1 zu entnehmen ist. Innerhalb eines bestimmten Schräglaufwinkelbereiches nimmt die Radseitenkraft Fy im wesentlichen proportional zum Schräglaufwinkel $\alpha$ zu. Die Größe dieses linearen Bereiches wiederum hängt vom Reibwert ab. Die Steigung der Kennlinie im linearen Bereich bezeichnet man als Schräglaufsteifigkeit. Die Schräglaufsteifigkeit ändert sich nur wenig bei einer Änderung des Reibwerts (vgl. Bereich A in Fig. 1). Außerhalb des linearen Bereiches schließen sich zwei zueinander punktsymmetrische Bereiche (Bereiche $B_1$ und $B_2$ in Fig. 1) der Reifensättigung an, in denen trotz Erhöhung des Schräglaufwinkelbetrages keine Erhöhung der Radseitenkraft mehr erreicht werden kann. In diesem Bereich bleibt die Radseitenkraft Fy konstant oder nimmt sogar wieder ab. Wie die Radseitenkräfte vom Fahrbahnreibwert abhängen, ist aus Fig. 1 ersichtlich. Darin ist mit der Kurve $K_1$ die Abhängigkeit der Reifenseitenkraft Fy vom Schräglaufwinkel $\alpha$ bei einem kleineren und mit der Kurve $K_2$ die gleiche Abhängigkeit bei einem größeren Fahrbahnreibwert dargestellt. Der Fahrbahnreibwert bestimmt also, wie hoch das Radseitenkraftmaximum liegt.

Das fahrdynamische Verhalten eines Fahrzeugs im Reifensättigungsbereich ist anders zu bewerten und sehr viel schwieriger zu beherrschen als im linearen Bereich. Ein normaler Fahrer ist gewöhnlich nur mit dem Fahrverhalten im linearen Bereich vertraut. In extremen Fahrsituationen, insbesondere bei kleinen Reibwerten, kann das Fahrzeug den linearen Bereich jedoch verlassen, was den Fahrer in der Regel überfordert.

Festzustellen ist, dass das Maximum der Reifenseitenkraft Fy und die Größe des linearen Seitenkraftbereiches wichtige Einflüsse auf die Schleuderneigung eines Fahrzeugs haben. Diese Schleuderneigung sollte immer soweit wie möglich reduziert werden.

Die vorliegende Erfindung stellt eine Regelstrategie zur Verfügung, mit der ein Regeleingriff an der Lenkung des Fahrzeugs, beispielsweise mittels einer sog. Überlagerungslenkung, bei allen Reibwerten die Fahrdynamik des Fahrzeugs verbessern und dessen Schleuderneigung verringern kann, wobei vorteilhafterweise (zumindest zunächst) kein Bremsregeleingriff erforderlich ist und sich somit im Regelfall keine nennenswerte Verzögerung des Fahrzeugs ergibt. Die vorliegende Regelstrategie benötigt dabei keine Information über den Reibwert, eine Kraftschlußbeanspruchung o. ä. Sie verwendet anstatt dessen im wesentlichen die Information über die tatsächlich auftretende Querbeschleungiung, die in einem modernen Fahrzeug fast immer zur Verfügung steht. Im folgenden wird die Regelstrategie mit Bezug auf eine Überlagerungslenkung erläutert. Es ist allerdings zu betonen, dass die erfindungsgemäße Regelstrategie auch bei anderen Lenkungs-Regeleingriffen angewendet werden kann, die zur Erzeugung eines Gegengiermomentes dienen.

Zunächst ist die Frage aufzuwerfen, wie das Ausbrechen eines Hecks verhindert werden kann. Insgesamt ist davon auszugehen, dass eine stabile Bewegung des Fahrzeugs bei wachsendem Schwimmwinkel immer auch mit einem wachsenden Gegengiermoment verbunden ist, welches gegen den Schwimmwinkel wirkt. Dieses Rückstellmoment wird insbesondere von den hinteren Reifen erzeugt. Mit dem wachsenden Schwimmwinkel muß die Radseitenkraft der Hinterreifen wachsen. Dieser Ansatz ist jedoch nur im linearen Bereich der Reifenkennlinie (vgl. Fig. 1) möglich. Deshalb ist es wichtig, dass der Schräglaufwinkel den linearen Bereich der Reifenkennlinie möglichst nicht verläßt.

Auf der anderen Seite steht der Schwimmwinkel β in enger Beziehung zum Schräglaufwinkel α, nämlich:

$$\alpha = \frac{r \cdot lh}{V} - \beta \qquad\qquad (1)$$

wobei r die tatsächliche Gierrate, Ih den Abstand zwischen Schwerpunkt und Hinterachse und V die Fahrzeuggeschwindigkeit bezeichnen. Da der Term (r • lh/V) klein ist im Vergleich zu β, gilt für die Amplitude des Schräglaufwinkels α im wesentlichen

$$\alpha = -\beta \qquad\qquad (2)$$

Diese Tatsache geht auch aus Fig. 2 hervor, in der die Größen α, β bzw. -β als Sprungantwort graphisch aufgetragen sind.

Allgemein kann man daher feststellen, dass sich bei einer Kurvenfahrt mit einem stationärer Schwimmwinkel β auch ein stationärer Schräglaufwinkel α einstellt. Damit ist der stationäre Endwert von α für jede Fahrbedingung im wesentlichen festgelegt. Nicht festgelegt ist jedoch das dynamische Übergangsverhalten zu diesem Endwert hin; also, wenn man von der Geradeausfahrt in die Kurvenfahrt übergeht. Tritt ein "Überschießer" in der Größe α auf, so kann der Schräglaufwinkel möglicherweise den linearen Bereich verlassen, obwohl dessen stationärer Endwert noch im linearen Bereich liegen würde. Aufgrund der obigen Gleichung (2) muß man deshalb darauf achten, dass auch in der Größe des Schwimmwinkels β keine Überschießer produziert werden. Mit anderen Worten ausgedrückt, muß eine Dämpfung in der Schwimmwinkel-Übertragungsfunktion einen Wert von etwa 1 erreichen. Mit dieser Vorgehensweise würde α immer im Reifensättigungsbereich und damit möglichst im linearen Bereich der Fig. 1 bleiben, wenn der Stationärwert für α auch im linearen Bereich liegt.

Bekannte Ansätze bei Regelstrategien für Überlagerungslenkungen führen die Gierrate zurück und erzeugen dadurch die oben genannte, gewünschte Dämpfung. Nachteilig hierbei ist jedoch, dass man zu dieser Berechnung einen Gierratensollwert (nachfolgend als rsoll bezeichnet) benötigt, und zwar entsprechend der Gleichung:

$$deltav = deltaL + Kr \cdot (rsoll - r), \qquad\qquad (3)$$

wobei deltav den Lenkwinkel der Vorderräder und deltaL den Lenkwinkel des Fahrers angeben.

Würde man nun auf den Gierratensollwert rsoll verzichten, da man ihn nicht unmittelbar angeben kann, so würde zwar die gewünschte Dämpfung erreicht werden. Die Kurvenwilligkeit des Fahrzeugs würde jedoch stark herabgesetzt werden, da dann

$$deltav = deltaL - Kr \cdot r \qquad\qquad (4)$$

gilt.

Dieses Problem wird nun dadurch gelöst, dass man anstelle der Gierrate die Schwimmwinkelgeschwindigkeit $\dot{\beta}$ zurückführt. Mit dieser Maßnahme kann ebenfalls die gewünschte Dämpfung erreicht werden. Die Schwimmwinkelgeschwindigkeit $\dot{\beta}$ bestimmt man aus:

$$\dot{\beta} = \frac{by}{V} - r \qquad\qquad (5)$$

wobei by die Fahrzeug-Querbeschleunigung bedeutet. Diese kinematische Beziehung gilt für jedes Fahrzeug, so dass man insgesamt von der Gleichung:

$$deltav = deltaL + K \cdot \dot{\beta} = deltaL + K \cdot \left(\frac{by}{V} - r\right) \qquad (6)$$

ausgehen kann, wobei K eine Konstante bezeichnet. Diese Gleichung hat den Vorteil, dass der stationäre Sollwert, der für die β-Rückführung benötigt wird, bekannt ist. Der Schwimmwinkel β ist nämlich während einer Kurve konstant. Damit ist der Sollwert für die Schwimmwinkelgeschwindigkeit gleich Null ($\dot{\beta} = 0$). Diese Regelstrategie greift ferner nur bei dynamischen Vorgängen und nicht bei stationären Vorgängen ein.

Durch Verwendung der Querbeschleunigung by muß nun nicht mehr auf einen nicht bekannten Gierratensollwert zurückgegriffen werden. Vielmehr sind alle in Gleichung (6) vorkommenden Größen im Fahrzeug bekannt.

Die letztgenannte Gleichung (6) löst jedoch ein weitergehendes Problem nicht, welches im folgenden dargestellt wird. Prinzipiell kann man bei einer Vernachlässigung der aerodynamischen Seitenkraft zwischen der Radseitenkraft Fy und der Querbeschleunigung folgenden Zusammenhang annehmen:

$$Fy = m \cdot by \qquad (7)$$

Bei einer gegebenen Fahrzeugmasse m hängt die maximal mögliche Querbeschleunigung by damit von der maximalen Radseitenkraft Fy ab, nämlich

$$max (by) = max (Fy) / m \qquad (8)$$

Macht man sich bewusst, dass für die Regelstrategie und die Fahrzeugbewegung die maximal erzielbare Querbeschleunigung bestimmend ist und nicht die maximale Radseitenkraft, so ist die Information der gemessenen Querbeschleunigung für die Regelstrategie insgesamt sehr wertvoll. Vergrößert der Fahrer den Lenkwinkel deltaL und damit den Schwimmwinkel β, den Schräglaufwinkel α und die Querbeschleunigung by immer weiter, so wächst ab einem bestimmten Punkt die individuelle Beschleunigung by nicht mehr wie die anderen Größen. An diesem Punkt ist dann klar, dass die maximale Reifenseitenkraft erreicht worden ist. Damit liefert die Querbeschleunigung by die gesuchte Information über die Reifensättigung automatisch mit.

Vergleicht man die obigen Gleichungen (3) und (6), so sieht man, dass der Ausdruck by/V mit einem Gierratenwert, insbesondere dem Gierratensollwert rsoll, verglichen werden kann. Mit anderen Worten bedeutet das, dass man die Querbeschleunigung mit Division durch die Geschwindigkeit als einen Gierratensollwert r_by ansehen kann:

$$r\_by = \frac{by}{V} \qquad (9)$$

Bei der vorliegenden erfindungsgemäßen Regelstrategie spielt die gemessene Querbeschleunigung by demnach zwei verschiedene Rollen:

	1. Befindet sich das Fahrzeug im linearen Reifenkraftbereich, bestimmt die Querbeschleunigung by zusammen mit der gemessenen Gierrrate r und der gemessenen Fahrzeuggeschwindigkeit V die Schwimmwinkelgeschwindigkeit β.
	2. Außerhalb des linearen Reifenkraftbereiches jedoch, also im Bereich der Reifensättigung, spielt die Querbeschleunigung by bei Division durch die Geschwindigkeit V die Rolle eines Gierratensollwertes rsoll, der die Reifenkraftsättigung mit berücksichtigt.

Damit kann die Verwendung der Größe aus Differenz zwischen dem Quotienten von Fahrzeugquerbeschleunigung by und Fahrzeuggeschwindigkeit V einerseits und der tatsächlich auftretenden Gierrate r andererseits als Basis für ein Reglerkommando sowohl im stabilen Fahrbetrieb als auch im instabilen Bereich verwendet werden. Eine Unterscheidung zwischen den beiden Bereichen muß vorteilhafterweise nicht getroffen werden.

Weiterhin wird nun vorgeschlagen, bei der bisher beschriebenen Regelungsstrategie auch noch den Fahrerlenkwinkel bzw. dessen Änderung zu berücksichtigen, woraus weitere wertvolle Informationen gewonnen werden können. Konnte nämlich das Fahrzeug trotz des Eingriffs mit obiger Regelstrategie nicht stabilisiert werden, so besitzt das Fahrzeug sehr große Schwimm- und Schräglaufwinkel außerhalb des linearen Reifenkraftbereiches, aber möglicherweise nur eine kleine Schwimmwinkelgeschwindigkeit. Dadurch kann die Regelstrategie keine große stabilisierende Stellkommados erzeugen, da sie ja lediglich eine Rückführung der Schwimmwinkelgeschwindigkeit auf Null anstrebt. Wenn der Fahrer jedoch in dieser Situation von einem destabilisierenden Lenkausschlag wieder geradeaus oder in die andere Richtung gegenlenkt, so läßt sich diese Information nutzen, um doch wieder eine Stabilisierung des Fahrzeugs zu erreichen. Dazu wird als Basis für das Reglerkommando das Minimum aus dem oben beschriebenen Quotienten aus Fahrzeugquerbeschleunigung und Fahrzeuggeschwindigkeit einerseits und einem zu berechnenden Gierratenwert andererseits gewählt, wobei dieser Gierratenwert in Abhängigkeit vom Fahrerlenkwinkel berechnet wird. Zur dynamischen Bestimmung des Gierratenwertes eignet sich in besonderer Weise die Ackermann-Beziehung, wobei die Beziehung zwischen Lenkwinkel und berechneter Gierrate r_ack wie folgt dargestellt werden kann:

$$r\_ack = h\_ack \cdot deltaL,$$

wobei

$$h\_ack = \frac{V}{(lv+lh)\cdot(1+(\frac{V}{Vchar})^2)}$$

und die charakteristische Geschwindigkeit Vchar

$$Vchar = \sqrt{\frac{(cv\cdot ch\cdot(lv+lh)^2}{m\cdot(ch\cdot lh-cv\cdot lv)}}$$

ist; m bezeichnet die Fahrzeugmasse, lv und lh die Schwerpunktspositionen und cv und ch Schräglaufsteifigkeiten bei hohen Fahrbahnreibwerten.

Diese Ackermann-Beziehung vernachlässigt die Reifenkraftsättigung. Sie ist daher nur eine gute Näherung für Hochreibwerte, da hier eine Reifensättigung kaum zu erwarten ist. Für Niedrigreibwerte ist sie keine geeignete Darstellung. Durch die Minimumbildung aus der Ackermann-Gierrate r_ack und dem Absolutwert der aus der Querbeschleunigung by ermittelten realen Gierrate kann man nun die Information des Fahrers, welche dieser über einen veränderten Lenkeinschlag liefert, nutzen. Um das Zusammenspiel von Regler und Fahrzeug zu optimieren, werden bei bevorzugten Ausführungsformen Filter, insbesondere Verzögerungsglieder und/oder Verzögerungs- und Vorhalteglieder, in die verschiedenen Regelkreise eingeführt.

Die vorliegende Erfindung wird im folgenden anhand mehrerer Ausführungsbeispiele und mit Bezug auf die beiliegenden Zeichnungen näher erläutert. Die Zeichnungen zeigen in

Fig. 1        eine Darstellung des graphischen Zusammenhangs zwischen Reifenseitenkraft und Schräglaufwinkel $\alpha$ bei zwei verschiedenen Fahrbahnreibwerten,

Fig. 2        eine Graphik, die die Beziehung von Schräglaufwinkel $\alpha$ und Schwimmwinkel $\beta$ zeigt,

Fig. 3        einen Graphen, welcher die Gierratensollwertbildung illustriert,

Fig. 4        ein Blockschaltdiagramm mit einem Ausführungsbeispiel eines erfindungsgemäßen Verfahrens,

Fig. 5        ein Blockschaltdiagramm mit einer weiteren Ausführungsform des erfindungsgemäßen Verfahrens,

Fig. 6        ein Blockschaltdiagramm mit einer dritten Ausführungsform des erfindungsgemäßen Verfahrens und

Fig. 7a
- 7l        verschiedene Diagramme, welche die Auswirkung der erfindungsgemäßen Regelstrategie auf eine Sprunganregung ausführlich darstellen.

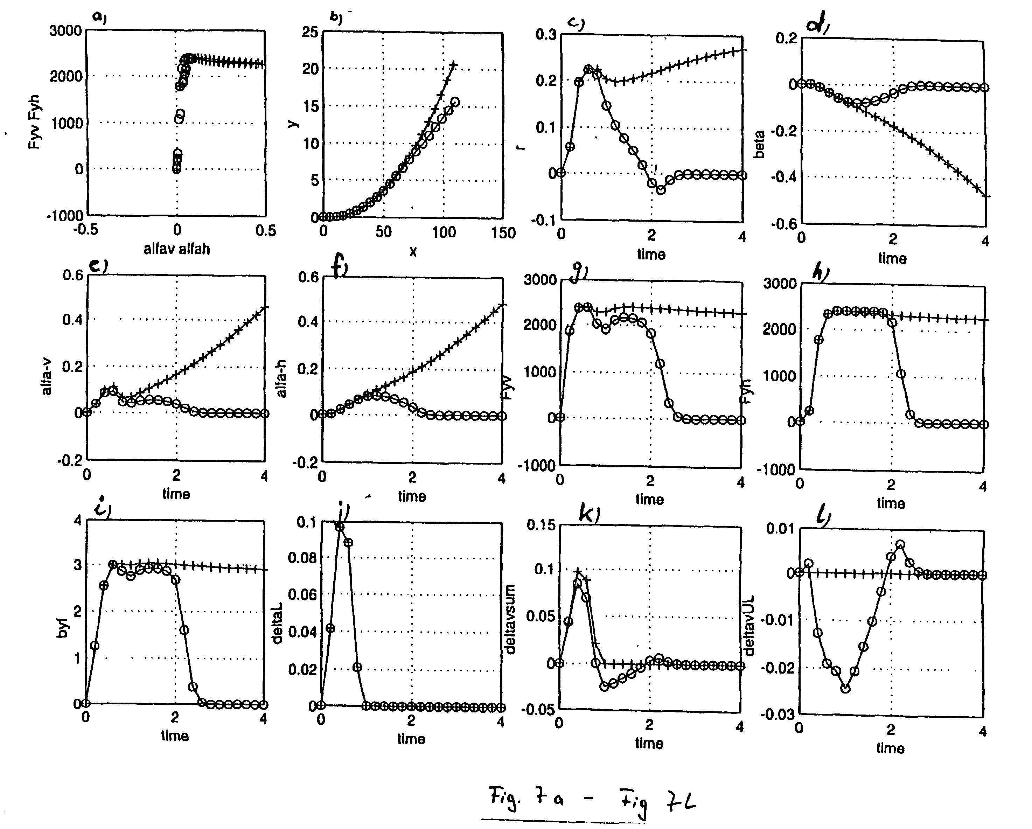

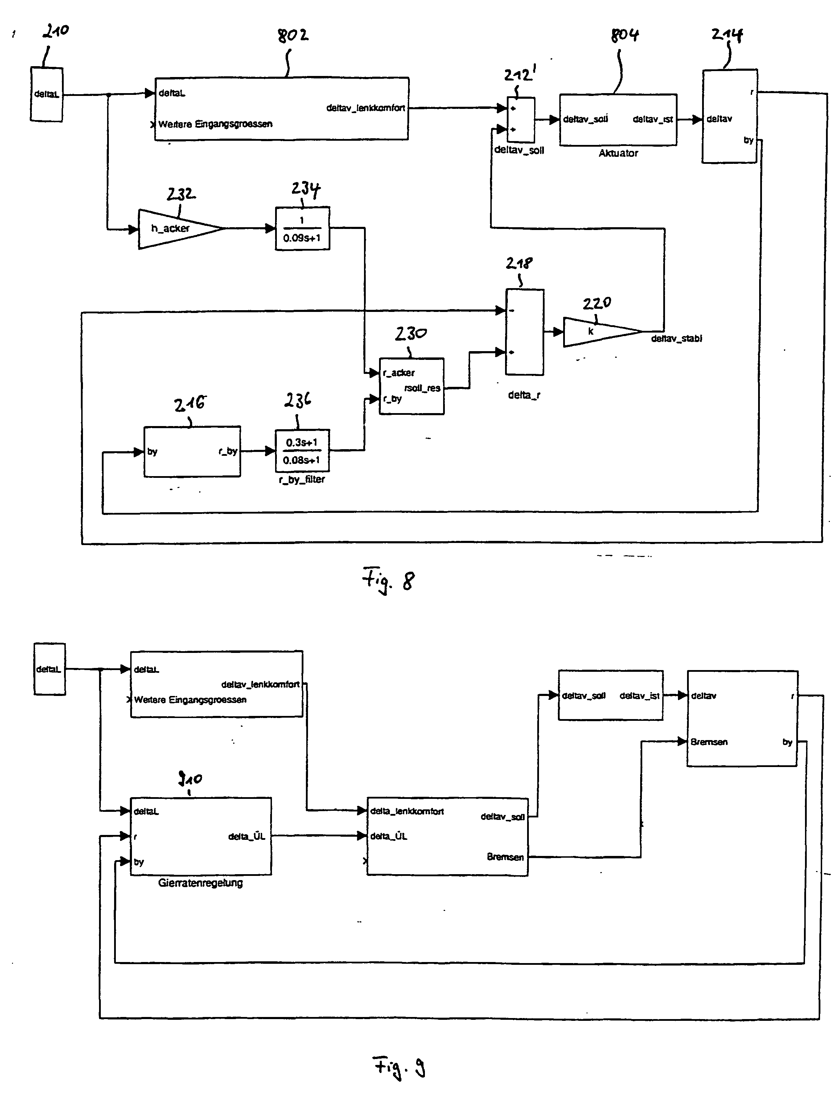

Fig. 8        ein Blockschaltdiagramm wie Fig. 6, wobei das erfindungsgemäße Verfahren bei einer steer-by-wire Lenkung angewendet ist,

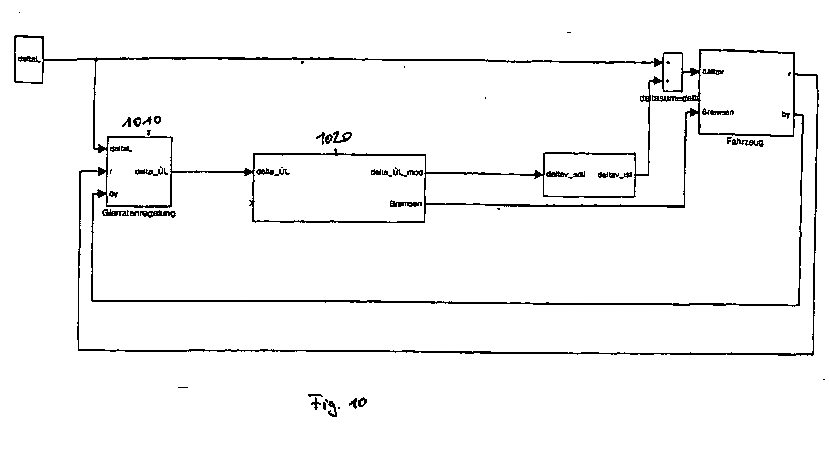

Fig. 9        ein Bockschaltdiagram mit einer vierten Ausführungsform des erfinderischen Verfahrens, wobei auch eine Regelstrategie zur Fahrstabilisierung mit Bremseingriff bei einem steer-by-wire System vorgesehen ist,

Fig. 10        ein Bockschaltdiagram mit einer fünften Ausführungsform des erfinderischen Verfahrens, wobei - wie in Fig. 9 eine Regelstrategie zur Fahrstabilisierung mit Bremseingriff vorgesehen ist, allerdings nunmehr bei einer Überlagerungslenkung.

Die vorliegende Erfindung wird anhand einer Überlagerungslenkung beispielhaft erläutert. Die Erfindung ist jedoch nicht auf diesen Anwendungsfall beschränkt.

In den nachfolgend erläuterten Ausführungsbeispielen kann der Fahrer einen normalen Lenkeingriff über ein Lenkrad durchführen. Das Lenkrad übermittelt die Aktion des Fahrers dann über eine Lenksäule oder über ein sog. steer-by-wire-System an die zu lenkenden Räder. Bei letzterem existiert keine Lenksäule mehr, so dass der fehlende mechanische Lenkdurchgriff durch einen "elektronischen" Lenkdurchgriff ersetzt werden muss. Dies geschieht indem er im Algorithmus der Regelstrategie mit realisiert wird. Damit enthält das Aktuatorkommando dann auch den Anteil von diesem Lenkdurchgriff, der die mechanische Lenksäule ersetzt.

Die dadurch gewonnene Freiheit in der Ausgestaltung lässt dann natürlich auch andere Freiräume, beispielsweise für eine Änderung der Lenkübersetzung in Abhängigkeit von der Geschwindigkeit oder einen agilitätssteigernden Vorhaltfilter, etc.. Die Realisierung des Lenkdurchgriffs im Algorithmus ist also nicht nur ein Ersatz der mechanischen Lenksäule sondern auch ganz allgemein zur Erzielung eines bestimmten Lenkkomforts gedacht.

In jedem Fall wird am Lenkrad ein Lenkwinkel deltaL erzeugt, der in mehr oder weniger veränderter Form an die lenkbaren Räder des Fahrzeugs übermittelt wird.

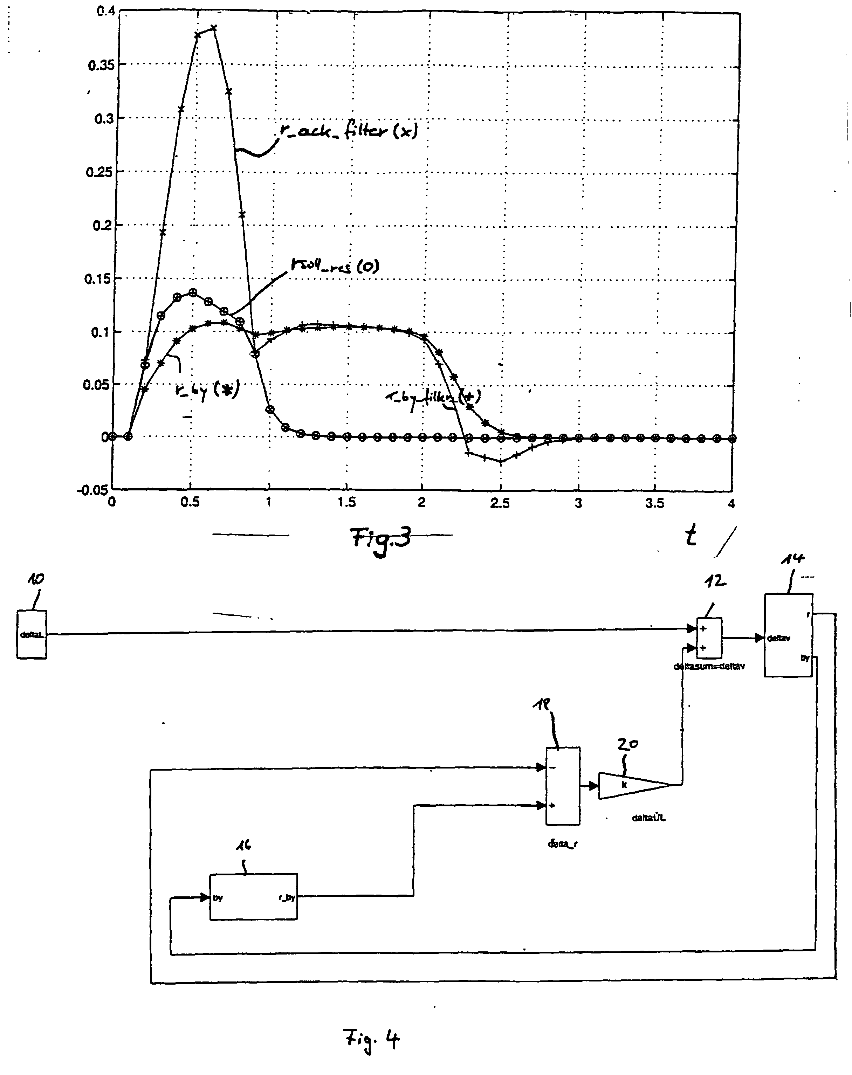

Im vorliegenden Fall ist eine nicht dargestellte zweigeteilte Lenksäule verwendet, wobei an der Trennstelle ein Getriebe vorgesehen ist, welches den zweiten Teil der Lenksäule gegenüber dem ersten Teil relativ verdrehen kann. Das Maß der Verdrehung wird durch den Zusatzlenkwinkel deltaÜL bestimmt. Diese Lenkung wird nachfolgend als Überlagerungslenkung bezeichnet, und die in den Ausführungsbeispielen verwendete Regelung ist in den Fig. 4, 5 und 6 dargestellt. Dabei ist die Lenkübersetzung in den Beispielen zur Vereinfachung auf 1 gesetzt.

Gemäß Fig. 4 erfüllt ein Summierer 12 schaltungstechnisch die Funktion des oben erwähnten Getriebes. Konkret liegen an dem Summierer 12 die Lenkwinkelvorgabe des Fahrers deltaL sowie der Zusatzlenkwinkel deltaÜL an. Am Ausgang des Summierers 12 wird die Summe, nämlich deltav (=deltasum), abgegeben und an eine Einheit zur Einstellung der Räder weitergeleitet.

Das Fahrzeug stellt im vorliegenden Fall eine Regelstrecke 14 dar und reagiert je nach Lenkwinkel mit einer realen, dem dynamischen Fahrzeugverhalten entsprechenden Gierrate r sowie einer realen Querbeschleunigung by. Diese beiden Werte werden bei der vorliegenden Regelstrategie innerhalb des Regelkreises auch zurückgeführt.

Aus der Querbeschleunigung by wird in einer Einheit 16 die Größe r_by berechnet, bei der es sich - wie oben bereits dargelegt - je nach Fahrstabilitätsbereich entweder um eine Komponente der Schwimmwinkelgeschwindigkeit β nach Gleichung (5) oder um eine Größe vergleichbar mit einem Gierratensollwert handelt. In jedem Fall wird die Größe r_by definiert durch den Quotienten aus der Fahrzeugquerbeschleunigung by und der Fahrzeuggeschwindigkeit V (also r_by = by/V). Dieser Wert wird einem Subtrahierer 18 an seinem positiven Eingang zugeführt. An dem negativen Eingang des Subtrahierers 18 liegt die tatsächliche, gemessene Gierrate r an. Als Differenz aus diesen beiden Größen wird der Wert delta_r erzeugt, welcher - mit dem Verstärkungsfaktor k in einem Multiplikator 20 multipliziert - den Überlagerungswinkel deltaÜL ergibt. Dieser Wert stellt im Fall gemäß Fig. 4 direkt das Reglerkommando dar. Mit diesem Reglerkommando wird - wie oben bereits erwähnt - der vom Fahrer vorgegebene Lenkwinkel deltaL im Summierer 12 überlagert.

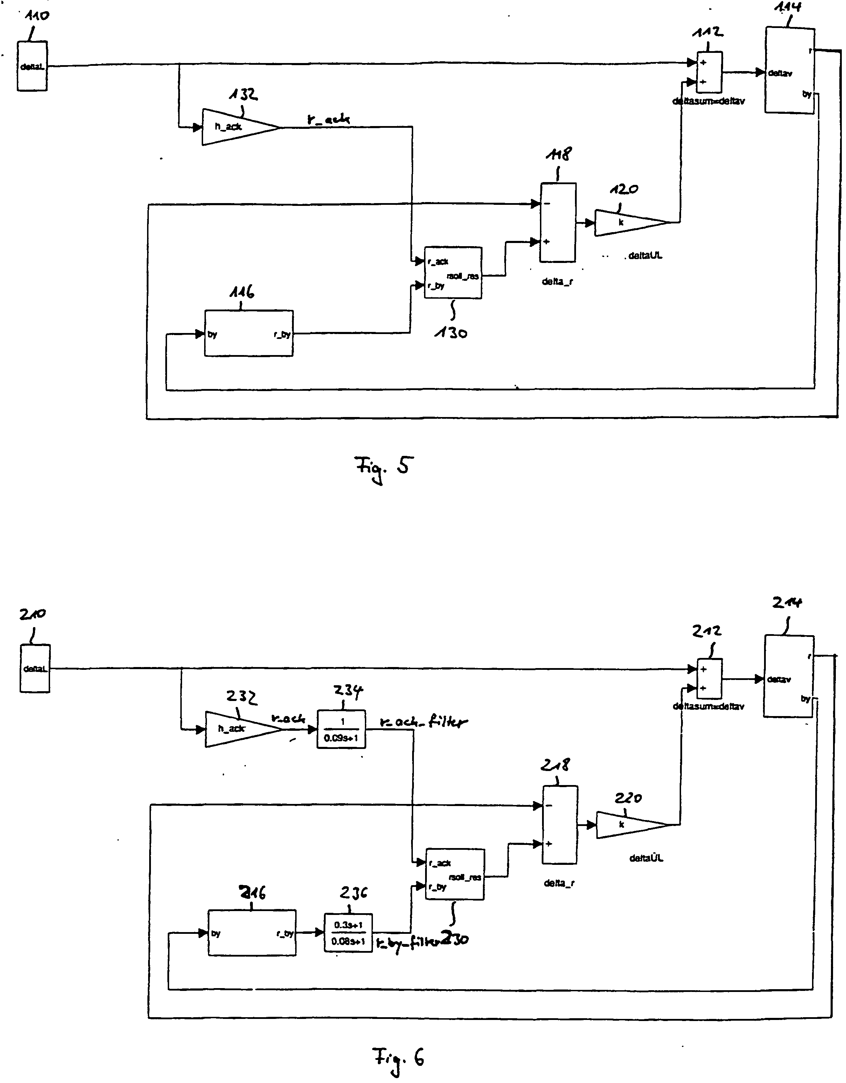

Gemäß einer weiterentwickelten Ausführungsvariante in Fig. 5, bei der entsprechende Blöcke entsprechende Funktionen und Vorrichtungen bezeichnen (die Bezugsziffern 110, 112, 114, 116, 118, 120 in Fig. 5 entsprechen den Bezugsziffern 10, 12, 14, 16, 18 und 20 in Fig. 4), ist zusätzlich der Fahrerlenkwinkel deltaL noch explizit bei der Bestimmung der Überlagerungsgröße deltaÜL berücksichtigt.

In einer Berechnungseinheit 132 wird aus der allgemein bekannten Ackermann-Beziehung eine (theoretische) Gierrate (r_ack) bestimmt:

$$r\_ack = h\_ack \cdot deltaL.$$

wobei sich die Größen h_ack und Vchar wie weiter oben angegeben ergeben.

Diese theoretisch berechnete Gierrate wird in einen Minimalwertbildner 130 eingelesen. Andererseits wird der oben bereits beschriebene Wert r_by dem Minimalwertbildner 130 zugeführt. Der Minimalwertbildner 130 bestimmt aus den beiden Größen r_ack und r_by eine Art Gierratensollwert, wobei das Vorzeichen des Gierratensollwerts bei dem vorliegenden Ausführungsbeispiel von dem Vorzeichen der Ackermann-Gierrate r_ack (=sign(r_ack)) abhängt.

Die Berücksichtigung der aus dem Fahrerlenkwinkel berechneten Ackermann-Gierrate r_ack im Minimalwertbildner 130 führt zur Berücksichtigung des Fahrerlenkwinkels für den Fall, dass der Fahrer bei großen Schwimmwinkeln und Schräglaufwinkeln eine Gegenlenkbewegung durchführt.

Gegenüber Fig. 5 unterscheidet sich die weitere Ausführungsvariante in Fig. 6 dadurch, dass nach der Berechnung der Ackermann-Gierrate r_ack noch ein Verzögerungsglied erster Ordnung (Bezugszeichen 234) eingeführt ist. Dieses Verzögerungsglied 234 führt zu einem geänderten Ackermann-Gierratenwert r_ack_filter, der dazu beiträgt, dass der Lenkwinkel deltaL nicht zu direkt auf die Regelung durchschlägt.

Ferner ist nach einer Berechnungseinheit 216, die analog den Fig. 4 und 5 für die Berechnung des Wertes r_by dient, noch ein Verzögerungs- und Vorhaltglied 236 eingefügt, welches zu einem veränderten Wert r_by_filter führt. Dieses Glied trägt dazu bei, dass die Regelung im Fahrzeug optimal abgestimmt ist. Die Regelung mittels der gerade genannten Filter ist zwar empfehlenswert aber nicht zwingend erforderlich.

Ansonsten bezeichnen Bezugszeichen 210, 212, 214, 216, 218, 220, 230 und 232 in Fig. 6 die gleichen Teile und funktionalen Einheiten wie die Bezugszeichen 110, 112, 114, 116, 118, 120, 130 und 132 in Fig. 5.

Der Effekt der vorliegenden Überlagerungslenkung in Bezug auf die Fahrstabilität wird mit Bezug auf die Fig. 3 und 7 deutlich.

In Fig. 3 ist das Signal r_ack_filter eingezeichnet, welches aus einem von einem Fahrer verursachten Lenkausschlag deltaL herrührt. Das Signal r_ack_filter stellt insbesondere die in dem Verzögerungsfilter 232 gefilterte Akkermann-Gierrate dar, welche sich im Zeitbereich zwischen 0 und 1 Sekunde als großer Peak (z.B. in Form einer positiven Sinushalbwelle) darstellt. Durch die in Fig. 6 beschriebene Rückkopplungsregelung ergibt sich dann ein Wert r_by, der ebenfalls aus Fig. 3 hervorgeht.

Durch die in Fig. 6 beschriebene Filterung mit Bezug auf die Einheiten 234 und 236 (Verzögerungsglieder bzw. Verzögerungs- und Vorhalteglieder) wird erreicht, dass r_ack_filter und r_by_filter im wesentlichen gleich schnell auf eine Lenkwinkeleingabe reagieren. Sie unterscheiden sich nur noch bei eintretender Reifensättigung. Ohne Reifensättigung sind sie näherungsweise gleich, so dass dann etwa

$$rsoll\_res \approx r\_by\_filter \approx r\_ack\_filter$$

gilt. Am Ausgang des Minimalwertbildners 230 ergibt sich ein resultierender Gierratenwert rsoll_res, welcher in Fig. 3 ebenfalls dargestellt ist und im Subtrahierer 218 als Eingangssignal für den positiven Eingang und zur Bildung der Größe delta_r dient. Mit dieser Größe wird, multipliziert mit dem Verstärkungsfaktor k im Multiplizierer 220, das Regelungskommando erzeugt, welches im vorliegenden Fall den Überlagerungswinkel deltaÜL darstellt und dem Summierer 212 zugeführt wird.

Die genauen Auswirkungen dieser Regelung werden aus den Fig. 7a bis 7l deutlich, welche die Auswirkungen eines Lenkmanövers auf einer Fahrbahn mit einem Reibwert von 0,3 bei einer erfindungsgemäßen Regelung zeigen. Dabei stellen die mit Kreisen gekennzeichneten Graphen das Lenk- und Fahrzeugverhalten mit der erfindungsgemäßen Regelung aus Fig. 6 dar. Die mit Kreuzen gekennzeichneten Graphen zeigen das Lenk- und Fahrzeugverhalten ohne eine solche Regelung.

In Fig. 7j ist ein die Regelung einleitender Lenkausschlag deltaL dargestellt. Durch die Differenzbildung im Subtrahierer 218 wird - zusammen mit dem Multiplikationsfaktor k - ein Überlagerungswinkel deltavÜL erreicht, wie er in Fig. 7l gezeigt ist. Insgesamt kommt man somit im Summierer 212 auf einen gesamten Lenkwinkel, wie er in Fig. 7k angegeben ist (deltavsum). Dieser Lenkwinkel wird an die Räder weitergegeben.

Es zeigt sich aus Fig. 7k, dass der tatsächlich an den Rädern anliegende Lenkwinkel (deltavsum) stets unter dem vom Fahrer vorgegebenen Lenkwinkel deltaL (Lenkung ohne Überlagerungslenkung) bleibt und überdies im Zeitbereich von etwa 1 Sekunde einen entgegengesetzten Lenkausschlag verursacht. Durch diese in Fig. 6 vorgestellten Regelungsstrategie hervorgerufene Modifikation des Lenkwinkelverlaufs an den Vorderrädern wird ein im wesentliches stabiles Fahrverhalten erreicht, was die übrigen Darstellungen in Fig. 7 zeigen.

Aus Fig. 7i ist zu erkennen, dass sich die Querbeschleunigung byf des Fahrzeugs im Bereich von 0 bis 2 Sekunden in einem Grenzbereich befindet. Nach 2 Sekunden kehrt sie wieder zu Null zurück. Dagegen bleibt die Querbeschleunigung byf ohne diese Regelung auf dem hohen Wert von 3 bestehen.

In den Fig. 7g und 7h sind die Radseitenkräfte vorne (Fig. 7g) sowie hinten (Fig. 7h) bei einem Lenkausschlag, wie er in Fig. 7j dargestellt ist, gezeigt. Aus den Fig. 7g und 7h ist zu erkennen, dass im Bereich von 0 bis 2 Sekunden eine erhöhte Radseitenkraft sowohl im vorderen wie auch im hinteren Bereich auftritt, die jedoch bei einer Regelstrategie gemäß der vorliegenden Erfindung nach etwa 2 Sekunden auf Null zurückkehrt. Ohne Regelung würde die Radseitenkraft dagegen sowohl an den vorderen wie auch an den hinteren Rädern auf dem erhöhten Wert in der Reifenkraftsättigung verbleiben.

Ein ähnliche Aussage kann man auch mit Bezug auf die Fig. 7e und 7f treffen, wo die Schräglaufwinkel $\alpha$ vorne (7e) sowie hinten (Fig. 7f) dargestellt sind. Man sieht bei den Fig. 7e und 7f, dass der Schräglaufwinkel innerhalb der ersten zwei Sekunden etwas von Null abweicht, dann jedoch wieder zu Null zurückkehrt. Ohne Regelungsstrategie würde der Schräglaufwinkel kontinuierlich abdriften, was einen Schleudervorgang des Fahrzeugs ausdrückt.

In Fig. 7d ist der Schwimmwinkel $\beta$ dargestellt. Auch aus Fig. 7d ist ersichtlich, dass das Fahrzeug innerhalb von 2 Sekunden wieder stabilisiert werden kann. Ohne die Regelungsstrategie würde das Fahrzeug ins Schleudern geraten.

Die während des Fahrvorgangs auftretende Gierrate ist in Fig. 7c gezeigt. In Fig. 7b ist das Fahrverhalten des Fahrzeugs von oben gesehen in einer XY-Ebene dargestellt. In dieser Abbildung wird deutlich, dass der Fahrer zunächst geradeaus fährt, sodann einen kurzen aber kräftigen Lenkeinschlag nach links vornimmt und dann wieder geradeaus lenkt. Mit der erfindungsgemäßen Regelung wird dadurch in stabiler Weise eine Kurve durchfahren und nach dem Lenkeinschlag das Fahrzeug wieder geradeaus bewegt. Ohne die Regelungsstrategie würde das Fahrzeug jedoch vom gewünschten Kurs und damit der Straße abkommen.

In Fig. 8 ist eine Variante für ein steer-by-wire-System gezeigt, bei dem die fehlende mechanische Lenksäule durch eine zusätzliche Lenkkomfortfunktion im Algorithmus ersetzt ist. Die Bezugszeichen in Fig. 8, die mit denjenigen aus Fig. 6 übereinstimmen bezeichnen die gleichen Regeleinrichtungen und -elemente. Neu in Fig. 8 sind lediglich die Bezugszeichen 802 und 804. Das Bezugszeichen 802 bezeichnet den in den früheren Figuren nicht dargestellten Aktuator. Das Bezugszeichen 802 bzeichnet eine Lenkkomfortfunktion f(deltaL,...) welche zur Umsetzung der steer-by-wire Lenkung notwendig ist.

Gemäß Fig. 8 erhält der in den Fig. 4, 5 und 6 nicht dargestellte Aktuator zusätzlich ein Stellkommando von der Lenkkomfortfunktion 802. Die Teilstellkommandos von der Gierratenregelung und von der Lenkkomfortfunktion können dann, wie in Fig. 8 gezeigt, im Summierer 212' zum Gesamtstellkommando für den Aktuator 804 aufsummiert werden.

In weiteren Ausführungsformen kann die Verarbeitung der Regeldifferenz (siehe z.B. in Fig. 6 nur das Element 220) umfangreicher sein, beispielsweise können zusätzliche Kennlinienglieder, wie Totzonen oder dynamische Filter, enthalten sein.

Auch ist eine Parameterabhängigkeit (scheduling) der Verstärkungs- und Filterglieder (234, 236, 230, 220) von weiteren fahrdynamischen Größen, wie z.B. dem Lenkwinkel, der Fahrzeuggeschwindigkeit, der Querbeschleunigung, dem Schwimmwinkel, dem Schräglaufwinkel etc. denkbar.

Die Bestimmung der Sollgierrate r_ack (Elemente 132 bzw. 232) kann auch durch andere Funktionen, wie z. B. Kennfelder oder algebraische Funktionen, realisiert werden, die dann die Abhängigkeit vom Lenkwinkel, der Fahrzeuggeschwindigkeit oder anderen Größen berücsichtigen.

Die vorgestellte Regelstrategie kann überdies Teil einer umfangreicheren Regelstrategie zur Fahrzeugstabilisierung sein, die zum einen zusätzlich den Schwimmwinkel oder den hinteren Schräglaufwinkel etc. auf zulässige Werte begrenzt und/oder zum anderen zusätzlich in speziellen Situationen auch Bremseingriffe hinzunimmt.

Solche Systeme sollen in den Fig. 9 und 10 lediglich angedeutet werden. In Fig. 10 ist eine Regelstrategie bei einer Überlagerungslenkung dargestellt, die in speziellen Situationen Bremseingriffe hinzunimmt. Dabei ist in einem Block 1010 die Gierratenregelung zusammengefasst und der Aktuator berücksichtigt.

Charakteristisch dabei ist, dass die Stellkommandos der oben beschriebenen Regelstrategie nur zeitweise ein einem Regelelement 1020 verändert werden (Signal delta_ÜL_mod) - entweder während der Hinzunahme von Bremseingriffen oder während einer aktivierten Begrenzung des Schwimmwinkels oder des Schräglaufwinkels.

Ist keine Hinzunahme von Bremseingriffen und keine Verkleinerung des Schwimmwinkels notwendig, so wird das Stellkommando der obigen Regelstrategie unverändert durchgeleitet (delta_ÜL = delta_ÜL_mod) und das Verfahren entspricht der Regelung, wie wir es aus den obigen Beispielen kennen. Die übrigen Regelelemente aus Fig. 10 entsprechen den jeweils vorher beschriebenen Elementen.

In Fig. 9 ist eine Regelstrategie wie in Fig. 10 dargestellt, nunmehr jedoch bei einer steer-by-wire Lenkung, wobei ebenfalls in speziellen Situationen Bremseingriffe hinzugenommen werden. Dabei ist wiederum in einem Block 910 die Gierratenregelung zusammengefasst und der Aktuator berücksichtigt. Das Regelelement 920 entspricht dem Regelelement 1020 aus Fig. 10, und die Elemente 902 und 904 den Elementen 802 und 804 aus Fig. 8.

Desweiteren ist auch eine Kombination mit Funktion wie z.B. einer Kompensation des störenden Giermoments bei mu-split-Bremsungen oder beim Lastwechsel oder Bremsen in der Kurve oder anderen Funktionen denkbar. Alle diese Funktionen bilden dann jeweils Teilstellkommandos, die beispielsweise durch eine Summation zusammengefasst, das Gesamtstellkommando für den Aktuator ergeben.

Insgesamt ist mit der vorliegenden Regelstrategie eine einfache und wirkungsvolle Möglichkeit zur Verbesserung der Fahrstabilität bei einem Fahrzeug gegeben, wobei man sich der im Fahrzeug an sich bekannten Größen bedienen kann. Eine ansonsten erforderliche Sollgierrate muß mit der vorliegenden Strategie nicht bestimmt werden. Überdies liefern die hierbei verwendeten Größen Auskunft über den Reifensättigungsbereich.

**Patentansprüche**

1. Verfahren zur Erhöhung der Fahrstabilität bei einem Fahrzeug, welches durch einen Regeleingriff bei dem Fahrzeug ein einer Fahrzeuginstabilität entgegenwirkendes Giermoment bewirkt, wobei das Maß des Regeleingriffes von einem Reglerkommando abhängt, das in Abhängigkeit von der Differenz aus dem Quotienten von Fahrzeugquerbeschleunigung (by) und Fahrzeuggeschwindigkeit (V) einerseits und der tatsächlich auftretenden Gierrate (r) andererseits bestimmt wird,
   **dadurch gekennzeichnet, dass** als Regeleingriff eine Vorderradlenkung und/oder eine Hinterradlenkung verwendet wird, und dass bei der Verwendung einer Vorderradlenkung der von einem Fahrer vorgegebene Lenkwinkel mit einem Zusatzlenkwinkel überlagert wird, wobei der Zusatzlenkwinkel von dem Reglerkommando bestimmt ist und das Reglerkommando in Abhängigkeit des Minimums aus den Absolutwerten des Quotienten aus Fahrzeugquerbeschleunigung (by) und Fahrzeuggeschwindigkeit (V) einerseits und eines berechneten Gierratenwertes andererseits gewählt wird, wobei dieser berechnete Gierratenwert in Abhängigkeit vom Fahrerlenkwinkel bestimmt wird.

**2.** Verfahren nach Anspruch 1,
**dadurch gekennzeichnet, dass** der berechnete Gierratenwert dynamisch bestimmt wird.

**3.** Verfahren nach Anspruch 1 oder 2,
**dadurch gekennzeichnet, dass** als berechneter Gierratenwert die Ackermann-Gierrate dient.

**4.** Verfahren nach einem der vorhergehenden Ansprüche,
**dadurch gekennzeichnet, dass** der berechnete Gierratenwert gefiltert, insbesondere mit einem Verzögerungsglied erster Ordnung gefiltert wird.

**5.** Verfahren nach einem der vorhergehenden Ansprüche,
**dadurch gekennzeichnet, dass** der aus dem Quotienten von Querbeschleunigung (by) und Fahrzeuggeschwindigkeit (V) ermittelte Wert gefiltert, insbesondere mit einem Verzögerungs- und Vorhaltglied gefiltert wird.

**6.** Verfahren nach einem der vorhergehenden Ansprüche,
**dadurch gekennzeichnet, dass** es sich bei der Vorderradlenkung um eine Überlagerungslenkung oder eine steer-by-wire Lenkung handelt.

**7.** Verfahren nach Anspruch 6,
**dadurch gekennzeichnet, dass** bei einer steer-by-wire Lenkung der fehlende mechanische Lenkdurchgriff mit einem eigenen elektronischen Reglerelement ersetzt ist.

**8.** Verfahren nach Anspruch 7,
**dadurch gekennzeichnet, dass** in dem elektronischen Reglerelement zur Ersetzung des mechanischen Lenkdurchgriffes weitere parameterabhängige Reglerverfahren zur Lenkkomforterhöhung implementiert sind.


**Claims**

**1.** A method of increasing the stability of a driven vehicle, wherein control action on the vehicle results in a yawing moment which counteracts the instability, wherein the extent of the control action depends on a controller command determined in dependence on the difference between the quotient of the vehicle transverse acceleration (by) and the vehicle speed (V) on the one hand and the actual yawing rate (r) on the other hand,
**characterised in that** the control action comprises steering a front wheel and/or a back wheel, and when a front wheel is steered the steering angle set by a driver is overlaid by an additional steering angle, wherein the additional steering angle is determined by the controller command, and the controller command is chosen in dependence on the minimum of the absolute values of the quotient from the vehicle transfer acceleration (by) and the vehicle speed (V) on the one hand and a calculated yawing rate on the other hand, wherein the calculated yawing rate is determined in dependence on the driver's steering angle.

**2.** A method according to claim 1, **characterised in that** the calculated yawing rate is dynamically determined.

**3.** A method according to claim 1 or 2, **characterised in that** the Ackermann yawing rate is used as the calculated yawing rate.

**4.** A method according to any of the preceding claims, **characterised in that** the calculated yawing rate is filtered, more especially with a first-order delay element.

**5.** A method according to any of the preceding claims, **characterised in that** the value obtained from the quotient of the transverse acceleration (by) and the speed (V) is filtered, more especially with a delay and derivative-action element.

**6.** A method according to any of the preceding claims, **characterised in that** the front wheel steering is overridden or steer-by-wire.

7. A method according to claim 6, **characterised in that** in the case of steer-by-wire steering the missing mechanical steering action is replaced by an individual electronic controller element.

8. A method according to claim 7, **characterised in that** in order to increase the convenience when steering, other parameter-dependent controller processes are implemented in the electronic controller element in place of the mechanical steering action.

**Revendications**

1. Procédé permettant d'augmenter la stabilité de conduite d'un véhicule produisant un couple de lacet antagoniste à l'instabilité du véhicule par une action de régulation sur le véhicule, l'amplitude de l'action de régulation dépendant d'un ordre de régulation lui-même défini en fonction d'une part de la différence du quotient de l'accélération transversale du véhicule (by) et de la vitesse (V) du véhicule et d'autre part de la vitesse de lacet effective (r),
**caractérisé en ce que**
l'action de régulation utilise une direction de roues avant et/ou de roues arrière, et
dans le cas de l'utilisation d'une direction de roues avant, l'angle de direction prédéfini par le conducteur est combiné à un angle complémentaire, l'angle complémentaire étant défini par l'ordre de régulation, et
l'ordre de régulation est sélectionné en fonction du minimum d'une part des valeurs absolues du quotient de l'accélération transversale (by) et de la vitesse (V) du véhicule et d'autre part d'une valeur calculée de la vitesse de lacet, la valeur calculée de la vitesse de lacet étant déterminée en fonction de l'angle de braquage.

2. Procédé selon la revendication 1,
**caractérisé en ce qu'**
on détermine d'une manière dynamique la valeur calculée de la vitesse de lacet.

3. Procédé selon l'une quelconque des revendications 1 ou 2,
**caractérisé en ce que**
la valeur calculée de la vitesse de lacet est la vitesse de lacet selon Ackermann.

4. Procédé selon l'une quelconque des revendications précédentes,
**caractérisé en ce qu'**
on filtre la valeur calculée de la vitesse de lacet, notamment avec un élément de temporisation du premier ordre.

5. Procédé selon l'une quelconque des revendications précédentes,
**caractérisé en ce qu'**
on filtre la valeur obtenue à partir du quotient de l'accélération transversale (by) et de la vitesse (V) du véhicule, notamment avec un élément de temporisation et de dérivation.

6. Procédé selon l'une quelconque des revendications précédentes,
**caractérisé en ce que**
la direction par les roues avant est une direction combinée ou une direction par câble.

7. Procédé selon la revendication 6,
**caractérisé en ce que**
la direction par câble remplace l'absence de transmission mécanique de direction par un élément de régulation électronique propre.

8. Procédé selon la revendication 7,
**caractérisé en ce que**
l'élément de régulation électronique implémente d'autres procédures de régulation dépendant des paramètres pour augmenter le confort de conduite en remplacement de la transmission mécanique de direction.

Fig. 1

Fig. 2

r_ack_filter (x)

rsoll_res (0)

r_by (*)

r_by_filter (+)

Fig.3

t

Fig. 4

Fig. 5

Fig. 6

Fig. 7a - Fig. 7l

210

802

212'

804

214

deltaL

deltaL

Weitere Eingangsgroessen

deltav_lenkkomfort

deltav_soll

deltav_soll        deltav_ist

Aktuator

r

deltav

by

232

234

h_acker

$\dfrac{1}{0.09s+1}$

218

220

k

deltav_stabi

230

r_acker        rsoll_res

r_by

delta_r

216

236

by        r_by

$\dfrac{0.3s+1}{0.08s+1}$

r_by_filter

**Fig. 8**

deltaL

deltaL

deltav_lenkkomfort

Weitere Eingangsgroessen

deltav_soll        deltav_ist

deltav

r

Bremsen        by

210

deltaL

r

by

delta_ÜL

delta_lenkkomfort        deltav_soll

delta_ÜL

Bremsen

Gierratenregelung

**Fig. 9**

15

Fig. 10